# EUROPÄISCHE PATENTANMELDUNG

(11) **EP 3 651 046 A1**
(43) Veröffentlichungstag der Anmeldung: **13.05.2020**
(21) Anmeldenummer: 18204923.9
(22) Anmeldetag: 07.11.2018
(51) Int. Cl.: G06F 21/57, G06F 21/60

(54) **VERFAHREN, CLIENT, ÜBERWACHUNGSEINHEIT UND ALARMIERUNGSEINHEIT ZUR SICHEREN NUTZUNG EINER GESCHÜTZTEN AUSFÜHRUNGSUMGEBUNG**

(71) Anmelder: Siemens Aktiengesellschaft, 80333 München (DE)
(72) Erfinder: Falk, Rainer, 85586 Poing (DE)

(57) **Zusammenfassung**

Eine geschützte Ausführungsumgebung (HSM) bestätigt eine Identität und/oder Eigenschaften der geschützten Ausführungsumgebung mittels einer kryptographisch geschützten Attestierung (EEA), welche gemeinsam mit einem berechneten Ausgabewert (IF) ausgegeben wird. Das Verfahren gibt mit der Attestierung eine manipulationsgeschützte Bestätigung der geschützten Ausführungsumgebung aus. Dadurch kann nachvollzogen und überprüft werden, dass der Ausgabewert tatsächlich in einer erwarteten Ausführungsumgebung ermittelt wurde, ohne die Hardware manuell zu überprüfen. Dies ist besonders vorteilhaft, wenn die Integrität eines Gesamtsystems bei kritischen Steuerungs- und Überwachungsaufgaben sichergestellt werden muss.

## Beschreibung

Die Erfindung betrifft sensible Berechnungen, insbesondere kryptographische Operationen, welche in einer geschützten Ausführungsumgebung durchgeführt werden, in der die Daten vor Manipulation und Auslesen geschützt sind. In einer geschützten Ausführungsumgebung können auch nicht-kryptographische sensible Berechnungen durchgeführt werden, z.B. eine biometrische Authentisierung oder eine Objekterkennung, Bildanalyse oder Merkmalsanalyse.

Als geschützte Ausführungsumgebungen sind beispielsweise bekannt: Secure Elements (auch im Deutschen so bezeichnet), Kryptocontroller, Hardware-Sicherheitsmodule (engl. "Hardware Security Module"), sowie Architekturen der Firmen Arm und Intel wie ARM TEE und Intel® SGX.

Weiterhin ist eine Attestierung der Konfiguration eines Computersystems bekannt. Dabei bestätigt ein Trusted Platform Module (auch im Deutschen so bezeichnet) den aktuellen Wert eines Plattform-Konfigurations-Registers. Die Attestierung ist kryptographisch geschützt.

Aus dem Dokument "Code Sample: Intel® Software Guard Extensions Remote Attestation End-to-End Example", erhältlich im Internet am 09.10.2018 unter https://software.intel.com/ enus/articles/code-sample-intel-software-guard-extensionsremote-attestation-end-to-end-example, ist eine entfernte Attestierung für die Intel-Architektur Intel® Software Guard Extensions (Intel® SGX) bekannt, bei der beim Verbindungsaufbau zu einem Server bestätigt wird, dass der Client-Endpunkt eine SGX-Enklave ist, d.h. ein in einer SGX-Enklave ausgeführter Programmcode. Durch die entfernte Attestierung kann der Server überprüfen, ob er tatsächlich mit einer bestimmten SGX-Applikation kommuniziert, d.h. ob der Endpunkt eines kryptographischen Kommunikationskanals eine SGX-Enklave ist.

Aus dem Dokument "Keyinfo", erhältlich im Internet am 09.10.2018 unter https://developer.android.com/reference/ android/security/keystore/KeyInfo#isInsideSecureHardware(), ist für einen Android Key Store bekannt, dass eine App abfragen kann, ob der von ihr verwendete Schlüssel Hardwarebasiert gespeichert ist.

Durch die vorliegende Erfindung soll eine Alternative zum Stand der Technik geschaffen werden.

Diese Aufgabe wird erfindungsgemäß dadurch gelöst, dass
- eine geschützte Ausführungsumgebung mindestens einen Eingabewert erhält und mindestens einen Ausgabewert ermittelt,
- die geschützte Ausführungsumgebung eine Identität und/oder Eigenschaften der geschützten Ausführungsumgebung mittels einer kryptographisch geschützten Attestierung bestätigt, und
- die geschützte Ausführungsumgebung den Ausgabewert und die Attestierung ausgibt.

Der Client besitzt eine Kommunikationsschnittstelle, eingerichtet
- zum Empfang eines Ausgabewerts und einer kryptographisch geschützten Attestierung, und
und einen Prozessor, programmiert
- zur Prüfung der Attestierung dahingehend, ob diese eine zulässige Identität und/oder zulässige Eigenschaften einer geschützten Ausführungsumgebung bestätigt, in der der Ausgabewert anhand des Eingabewerts ermittelt wurde, und
- zur Akzeptanz des Ausgabewerts, falls das Ergebnis der Prüfung mindestens ein vorgegebenes Kriterium erfüllt.

Das vorgegebene Kriterium besteht beispielsweise darin, dass die Identität der geschützten Ausführungsumgebung einer erwarteten Identität entspricht. Weitere Gestaltungsmöglichkeiten für das Kriterium werden in den Unteransprüchen und Ausführungsbeispielen erläutert.

Die Überwachungseinheit besitzt
- eine Kommunikationsschnittstelle, eingerichtet
   - zum Empfang einer kryptographisch geschützten Attestierung, und
- einen Prozessor, programmiert
   - zur Prüfung der Attestierung dahingehend, ob diese eine zulässige Identität und/oder zulässige Eigenschaften einer geschützten Ausführungsumgebung bestätigt, und
   - zur Sendung einer Freigabe mittels der Kommunikationsschnittstelle an eine weitere Komponente, falls die Prüfung erfolgreich war.

Die Alarmierungseinheit besitzt
- eine Kommunikationsschnittstelle, eingerichtet
   - zum Empfang einer kryptographisch geschützten Attestierung, welche mindestens eine Umgebungsbedingung einer geschützten Ausführungsumgebung bestätigt, und
- einen Prozessor, programmiert
   - zur Prüfung, ob die Umgebungsbedingungen ein vorgegebenes Kriterium erfüllt, und
   - zur Generierung einer Alarm-Meldung, wenn das Kriterium nicht erfüllt ist.

Gemäß einer Weiterbildung können die Funktionen der Überwachungseinheit und Alarmierungseinheit auch durch ein einziges System bereitgestellt werden.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Bei dem Eingabewert und Ausgabewert kann es sich wie bei mathematischen Funktionen und Programmprozeduren üblich sowohl um einfache Zahlenwerte oder Anfragen als auch um komplizierte Datenstrukturen wie etwa Bilddateien handeln. Beispielsweise berechnet die geschützte Ausführungsumgebung den Ausgabewert aus dem Eingabewert. Es kann sich bei dem Eingabewert und dem Ausgabewert jedoch auch um beliebige andere Anfragen, Messwerte oder Steuersignale handeln, wie dies im Rahmen der Unteransprüche erläutert wird.

Weiterhin kann der Eingabewert gemäß einem entsprechenden Ausführungsbeispiel ein Eingabedatensatz mit einer Mehrzahl von Datensatzelementen sein. Ferner kann auch der Ausgabewert gemäß einem entsprechenden Ausführungsbeispiel ein Ausgabedatensatz mit einer Mehrzahl von Datensatzelementen sein.

Zum kryptographischen Schutz der Attestierung wird diese beispielsweise mit einer digitalen Signatur oder einer kryptographischen Prüfsumme geschützt. Die kryptographische Prüfsumme kann beispielsweise ein Nachrichtenauthentisierungscode (Message Authentication Code, MAC) oder ein kryptographischer Hash-Wert sein.

Das Verfahren gibt mit der Attestierung eine manipulationsgeschützte Bestätigung der geschützten Ausführungsumgebung aus. Die Attestierung bestätigt eine Identität und/oder Eigenschaften der geschützten Ausführungsumgebung, in der der Ausgabewert ermittelt wurde. Dazu wird zu dem Ausgabewert eine Information angegeben, in welcher geschützten Ausführungsumgebung dieser Ausgabewert ermittelt wurde.

Durch das Verfahren kann nachvollzogen und überprüft werden, dass der Ausgabewert tatsächlich in einer erwarteten Ausführungsumgebung ermittelt wurde, ohne die Hardware manuell zu überprüfen. Dies ist besonders vorteilhaft, wenn die Integrität eines Gesamtsystems bei kritischen Steuerungs- und Überwachungsaufgaben sichergestellt werden muss.

Die Überwachungseinheit und der Client prüfen die Attestierung dahingehend, ob diese eine zulässige Identität und/oder zulässige Eigenschaften einer geschützten Ausführungsumgebung bestätigt; also ob die durch die Attestierung bestätigte Identität und/oder Eigenschaften der geschützten Ausführungsumgebung zulässig sind, d.h. den Erwartungen der Überwachungseinheit bzw. des Clients entsprechen und/oder allgemein mindestens ein Kriterium im Hinblick auf Sicherheitsanforderungen erfüllen.

Gemäß einer Ausführungsform beinhaltet die Attestierung den Eingabewert und/oder Ausgabewert selbst oder einen kryptographischen Hash-Wert des Eingabewerts und/oder des Ausgabewerts oder eine Identifizierungsinformation des Eingabewerts und/oder des Ausgabewerts.

In diesem Zusammenhang ist es möglich, dass der Eingabewert und/oder der Ausgabewert neben Nutzdaten eine Identifizierungsinformation umfasst, beispielsweise einen Uniform Resource Identifier (URI) oder einen Universally Unique Identifier (UUID). Die Attestierung kann die Identifizierungsinformation des Eingabewerts und/oder des Ausgabewerts beinhalten.

In der Attestierung kann der Ausgabewert also explizit enthalten oder durch einen kryptographischen Hash-Wert referenziert sein. Vorzugsweise wird im Rahmen der Attestierung auch der Eingabewert bestätigt.

In einer Weiterbildung beinhaltet die Attestierung
- einen Typ der geschützten Ausführungsumgebung,
- eine verwendete Hardware-Recheneinheit der geschützten Ausführungsumgebung,
- eine Konfiguration der geschützten Ausführungsumgebung,
- eine Selbsttest-Information der geschützten Ausführungsumgebung,
- eine Diagnose-Information der geschützten Ausführungsumgebung,
- eine Angriffssicherheits-Zertifizierung der geschützten Ausführungsumgebung,
- eine Betriebssicherheits-Zulassung der geschützten Ausführungsumgebung,
- Betriebssicherheits-Eigenschaften der geschützten Ausführungsumgebung, und/oder
- Schutzeigenschaften einer Umgebung der geschützten Ausführungsumgebung.

Gemäß einer Ausführungsform wird mindestens eine Umgebungsbedingung der geschützten Ausführungsumgebung (HSM) während der Ermittlung des Ausgabewerts mittels eines Sensors erfasst. Die Attestierung beinhaltet die Umgebungsbedingung.

Entsprechend dieser Ausführungsform werden Umgebungsbedingungen der geschützten Ausführungsumgebung während der Durchführung der für die Ermittlung des Ausgabewerts erforderlichen Berechnungen erfasst und bestätigt.

In einer Weiterbildung beinhaltet die Attestierung eine Zählerinformation und/oder einen Zeitstempel. Dadurch kann eine Aktualität der Attestierung überprüft werden.

Gemäß einer Ausführungsform enthält die geschützte Ausführungsumgebung eine Laufzeitumgebung und mindestens eine App enthält. Die Laufzeitumgebung leitet den Eingabewert an die App weiter. Die App berechnet den Ausgabewert und gibt diesen an die Laufzeitumgebung zurück. Die Laufzeitumgebung nimmt einen Identifikator der App in die Attestierung auf.

In einer Weiterbildung ist der Ausgabewert ein Steuersignal zur Ansteuerung einer Komponente in einer industriellen Anlage, insbesondere eines Industrieroboters in einer Fertigungsanlage. Alternativ ist die geschützte Ausführungsumgebung in einer Cloud oder in einem Steuergerät angeordnet.

Die Echtheit des Steuersignals kann mittels der Attestierung überprüft werden. Durch diese Weiterbildung werden neue und flexible Realisierungsarchitekturen für kritische Steuerungsfunktionen möglich, beispielsweise Cloud-basierte Robotikanwendungen. So ermöglicht es diese Weiterbildung bei einer flexiblen Fertigung, beispielsweise im Umfeld von Industrie 4.0, im laufenden Betrieb zu prüfen, ob Steuerdaten von einer zulässigen Ausführungsumgebung stammen.

Gemäß einer Ausführungsform ist der Ausgabewert ein Messwert, welcher von einer Komponente in einer industriellen Anlage, insbesondere einem Industrieroboter in einer Fertigungsanlage, mit einem Sensor gemessen wurde. Alternativ ist der Ausgabewert ein Betriebszustand einer Komponente in einer industriellen Anlage, insbesondere eines Industrieroboters in einer Fertigungsanlage.

Diese Ausführungform ermöglicht es beispielsweise im Rahmen einer flexiblen Fertigung, im laufenden Betrieb zu prüfen, ob Überwachungsdaten von einer zulässigen Ausführungsumgebung stammen.

In einer Weiterbildung sendet die geschützte Ausführungsumgebung die Attestierung und den Ausgabewert an eine weitere Komponente. Die weitere Komponente prüft die Attestierung und akzeptiert den Ausgabewert, falls die Prüfung erfolgreich ist.

Die weitere Komponente ist beispielsweise ein entfernter Client in einem Automatisierungsnetzwerk.

Gemäß einer Ausführungsform sendet die weitere Komponente zuvor den Eingabewert an die geschützte Ausführungsumgebung.

In einer Weiterbildung sendet die geschützte Ausführungsumgebung die Attestierung an eine Überwachungseinheit und den Ausgabewert an eine weitere Komponente. Die Überwachungseinheit überprüft die Attestierung. Die weitere Komponente akzeptiert den Ausgabewert akzeptiert, falls die Prüfung erfolgreich ist.

Gemäß einer Ausführungsform sendet die geschützte Ausführungsumgebung die Attestierung an eine Überwachungseinheit. Die Überwachungseinheit überprüft, ob die mindestens eine Umgebungsbedingung ein vorgegebenes Kriterium erfüllt, und generiert eine Alarm-Meldung, falls das Kriterium nicht erfüllt ist.

Das Kriterium ist nicht erfüllt, wenn die Ermittlung des Ausgabewerts unter dafür unzulässigen Umgebungsbedingungen erfolgt. Beispielsweise ist das Kriterium ein Schwellwert für eine Umgebungstemperatur, der während einer Berechnung des Ausgabewerts nicht überschritten werden darf.

Das Computersystem enthält einen Prozessor und eine geschützte Ausführungsumgebung, welche zur Durchführung des Verfahrens eingerichtet ist.

Das Computersystem ist beispielsweise ein Cloud-Server, ein Internet-der-Dinge-Gerät oder ein Edge-Gerät. Der Prozessor ist beispielsweise ein Mikroprozessor oder Mikrocontroller, ein System-on-Chip oder ein programmierbarer Digitalbaustein, etwa ein "Field Programmable Gate Array" (FPGA).

Das Steuergerät umfasst das Computersystem. Es ist beispielsweise eine speicherprogrammierbare Steuerung.

Der Industrieroboter enthält das Computersystem.

Das Steuergerät umfasst den Client. Es ist beispielsweise eine speicherprogrammierbare Steuerung.

Der Industrieroboter enthält den Client.

Das Automatisierungsnetzwerk umfasst das Computersystem, das Steuergerät, den Industrieroboter, den Client und/oder die Überwachungseinheit.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Fig. 1: ein Netzwerk mit einem Computersystem CS, welches eine geschützte Ausführungsumgebung bereitstellt,
- Fig. 2: einen Ablauf, bei dem ein Client C Bilddaten einem Computersystem CS zur Merkmalsanalyse bereitstellt, wobei ein Hardware-Sicherheitsmodul HSM die Bildanalyse IA durchführt und Bildmerkmale IF mit einer Attestierung EEA an den Client C zurückgibt,
- Fig. 3: einen Ablauf, bei dem eine Attestierung EEA einem separaten Überwachungssystem MS bereitgestellt wird, und
- Fig. 4: einen Ablauf, bei dem eine Laufzeitumgebung R auf einem Hardware-Sicherheitsmodul HSM bestätigt, durch welche App auf dem Hardware-Sicherheitsmodul HSM eine Berechnung erfolgt ist.

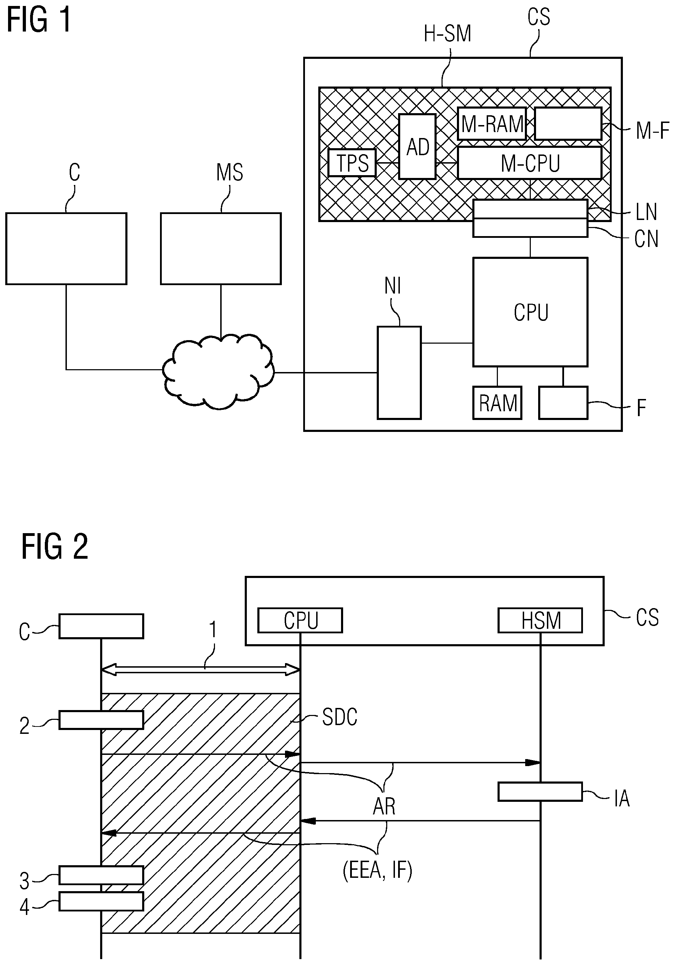

Figur 1 zeigt ein Computersystem CS, beispielsweise ein Internet-der-Dinge-Gerät, ein Steuergerät oder ein Edge-Gerät mit einem Prozessor CPU, einem Arbeitsspeicher RAM, einem Flash-Speicher F und einer Netzwerkschnittstelle NI. Über einen Steckverbinder, welcher aus zwei Konnektoren CN besteht, ist ein Hardware-Sicherheitsmodul HSM enthalten, das eine geschützte Ausführungsumgebung bereitstellt. Das Hardware-Sicherheitsmodul HSM enthält einen Modul-Prozessor M-CPU, einen Modul-Arbeitsspeicher M-RAM, einen Modul-Flash-Speicher M-F. Weiterhin enthält das Hardware-Sicherheitsmodul HSM einen vertrauenswürdigen physikalischen Sensor TPS (im Englischen als "trusted physical sensor" bezeichnet), der über einen Analog-Digital-Wandler AD mit dem Modul-Prozessor M-CPU verbunden ist.

Über die Netzwerkschnittstelle NI wird dem konventionellen Teil des Computersystems CS eine Anfrage von einem Client C zur Bearbeitung bereitgestellt, beispielsweise Bilddaten, die zu analysieren sind. Der Prozessor CPU stellt diese Daten dem Hardware-Sicherheitsmodul HSM bereit, damit dort die Analyse in einer manipulationsgeschützten Ausführungsumgebung erfolgen kann. Das Ergebnis wird vom Hardware-Sicherheitsmodul HSM an den Prozessor CPU zurückgegeben, sodass dieser es an den Client C ausgeben kann.

Im Stand der Technik besteht nun das Problem, dass die auf dem Prozessor CPU ausgeführte Software manipuliert sein könnte, sodass dieser das Hardware-Sicherheitsmodul HSM gar nicht verwendet oder dessen Ergebnis manipuliert.

Gemäß dem vorliegenden Ausführungsbeispiel stellt das Hardware-Sicherheitsmodul HSM eine kryptographisch geschützte Attestierung (Bestätigung) aus, dass ein bestimmter Ausgabewert auf dem Hardware-Sicherheitsmodul HSM berechnet wurde. Weiterhin kann eine Umgebungsbedingung des Hardware-Sicherheitsmoduls HSM, beispielsweise eine Temperatur, die während der Berechnung auf dem Hardware-Sicherheitsmodul HSM mittels eines Temperatursensors als vertrauenswürdiger physikalischer Sensor TPS gemessen wurde, im Rahmen der kryptographisch geschützten Attestierung bestätigt werden. Dadurch kann eine Überwachungseinheit MS als vorgegebenes Kriterium überprüfen, dass die tatsächliche Temperatur des Hardware-Sicherheitsmoduls HSM während der Berechnung in einem zulässigen Temperaturbereich lag, und andernfalls eine Alarm-Meldung generieren. Andere Beispiele für Umgebungsbedingungen sind Druck, Strahlung, Spannungspegel oder Taktfrequenz. Dabei können Maximalwerte, statistische Werte (z.B. Mittelwert, Maximalwert, Minimalwert, Varianz) oder der Rohdatenverlauf durch die Attestierung bestätigt werden.

Die Überwachungseinheit MS besitzt hierzu eine Kommunikationsschnittstelle, über welche sie die kryptographisch geschützte Attestierung mit der Umgebungsbedingung empfängt, und einen Prozessor, programmiert zur Prüfung, ob die Umgebungsbedingungen ein vorgegebenes Kriterium erfüllt, und zur Generierung einer Alarm-Meldung, wenn das Kriterium nicht erfüllt ist.

In einer weiteren Variante enthält die dem die Attestierung eine Zählerinformation und/oder einen Zeitstempel, damit deren Aktualität überprüft werden kann.

Anstelle des Hardware-Sicherheitsmoduls HSM kann im vorliegenden wie in den nachfolgend beschriebenen Ausführungsbeispielen auch eine andere geschützte Ausführungsumgebung zum Einsatz kommen, beispielsweise ein Secure Element, ein Kryptocontroller oder eine der beiden eingangs genannten Architekturen. Die Attestierung bestätigt beispielsweise folgende Eigenschaften der geschützten Ausführungsumgebung:
- Typ: beispielsweise Linux User Space, Container Runtime, Hardware-Sicherheitsmodul, Secure Element, Tamper-Protected FPGA, Tamper-Protected Microcontroller, Graphics Processing Unit GPU
- Verwendete Hardware-Recheneinheit: Typ, beispielsweise CPU, FPGA, GPU und Modell; CPU-Architektur (z.B. ARM Cortex-A, x86); verwendeter Core bzw. verwendete Cores einer Mehrkern-CPU, Identität (Seriennummer) der Hardware-Recheneinheit (CPU ID)
- Konfiguration der geschützten Ausführungsumgebung: etwa Firmware-Hash, Version, Patch-Status, Änderungsdatum, Hardware-Revision, Board-Hersteller
- eine Selbsttest-Information der geschützten Ausführungsumgebung: beispielsweise eine Information, ob der letzte durchgeführte Selbst-Test erfolgreich war, der Zeitpunkt des zuletzt durchgeführten Selbsttests, die Zeitdauer, wie lange der zuletzt durchgeführte Selbsttest zurückliegt
- eine Diagnose-Information der geschützten Ausführungsumgebung: beispielsweise CPU-Last, Speicherauslastung, erkannte bzw. korrigierte Speicherfehler
- Angriffssicherheits-Zertifizierung: etwa FIPS140-2, Common Criteria, ISO/IEC62443, und ggf. die erreichte Stufe etwa FIPS140-2 Level 3, CC EAL4+, ISO/IEC62443 SL3
- Betriebssicherheits-Zulassung: etwa SIL1, SIL3-Rechner, sowie Angabe von Betriebssicherheits-Eigenschaften, etwa mehrkanaliger Rechner, Lockstep-Architektur
- Zusätzliche Schutzmaßnahmen der Umgebung, beispielsweise ob das die geschützte Ausführungsumgebung realisierende Rechensystem in einem Alarm-geschützten Schaltschrank oder 19" Rack installiert ist, oder in einem speziellen geschützten Sicherheitsbereich in einer Fertigung oder in einem Rechenzentrum installiert ist.

Angriffssicherheit wird im Englischen als "Security" bezeichnet, während Betriebssicherheit bzw. funktionale Sicherheit im Englischen als "Safety" bezeichnet wird.

Der Ausgabewert könnte in einem ersten Szenario ein Steuersignal sein, welches vom Computersystem CS an einen Client C ausgegeben wird. Der Client C ist beispielsweise ein Industrieroboter in einer Fertigungsanlage oder dessen Steuergerät. Der Client C kann die Echtheit des Steuersignals mittels der Attestierung überprüfen. Dies ermöglicht neue und flexible Realisierungsarchitekturen für kritische Steuerungsfunktionen, beispielsweise Cloud-basierte Robotikanwendungen, wenn das Computersystem CS in einer Cloud angeordnet wird. Bei einer flexiblen Fertigung, beispielsweise im Umfeld von Industrie 4.0, kann der Client C im laufenden Betrieb prüfen, ob Steuerdaten, die er aus der Cloud erhält, von einer zulässigen Ausführungsumgebung stammen.

In diesem ersten Szenario verfügt der Client C notwendigerweise über eine Kommunikationsschnittstelle zum Empfang des Ausgabewerts und der Attestierung, und weiterhin über einen Prozessor zur Prüfung der Attestierung.

Umgekehrt kann das Computersystem CS jedoch auch selbst in einer industriellen Anlage bzw. im Edge angeordnet sein. In diesem zweiten Szenario ist der Ausgabewert beispielsweise ein Messwert, welcher von dem Computersystem CS als Internet-der-Dinge-Gerät oder Edge-Gerät mit einem Sensor gemessen wurde. Alternativ ist der Ausgabewert ein Betriebszustand einer Komponente in einer industriellen Anlage, welche von dem Computersystem CS überwacht oder angesteuert wird. In diesem zweiten Szenario könnte der Client C dagegen in der Cloud angeordnet oder eine weitere Komponente der industriellen Anlage sein. Das zweite Szenario ermöglicht es beispielsweise im Rahmen einer flexiblen Fertigung, im laufenden Betrieb zu prüfen, ob Überwachungsdaten von einer zulässigen Ausführungsumgebung stammen.

In diesem zweiten Szenario ist der Eingabewert beispielsweise eine Anfrage, etwa nach einer Sensormessung. Nach Erhalt des Eingabewerts misst das Computersystem CS etwa die Temperatur mittels eines Sensors und gibt die Temperatur als Ausgabewert zurück. Die Anfrage kann auch beliebige andere Betriebszustände betreffen, etwa eine Drehzahl oder einen Fehlerstatus, welche als Ausgabewert zurückgegeben werden.

Falls das Computersystem CS ein Industrieroboter ist, könnte der Eingabewert im zweiten Szenario aber auch ein Steuersignal sein. Nach Erhalt des Steuersignals führt der Industrieroboter in dieser Variante beispielsweise einen Fertigungsschritt durch und quittiert dessen Durchführung mit dem Ausgabewert.

Figur 2 zeigt ein Ausführungsbeispiel, bei der ein Client C Bilddaten einem Computersystem CS, z.B. einem Cloud-Dienst oder einem Edge-Server, zur Merkmalsanalyse bereitstellt. Innerhalb des Computersystems CS, das einen Prozessor CPU enthält, wird ein Hardware-Sicherheitsmodul HSM für eine Bildanalyse IA der Bilddaten verwendet. Dies hat den Vorteil, dass die Bildanalyse IA in einer manipulationsgeschützten Ausführungsumgebung erfolgt.

In einem ersten Schritt 1 wird mit dem Verschlüsselungsprotokoll TLS ein sicherer Kommunikationskanal zwischen dem Client C und einem Prozessor CPU des Computersystems CS aufgebaut. Anschließend beginnt eine sichere Datenverbindung SDC zwischen dem Client C und dem Prozessor CPU. Daraufhin erfasst oder ermittelt der Client C in einem zweiten Schritt 2 ein Bild, welches er mit einer Analyseanfrage AR an den Prozessor CPU sendet. Dieser leitet die Analyseanfrage AR an das Hardware-Sicherheitsmodul HSM weiter, welches daraufhin die Bildanalyse IA durchführt, wobei das Bild als Eingabewert dient und Bildmerkmale IF als Ausgabewert berechnet werden.

Anschließend sendet das Hardware-Sicherheitsmodul HSM die ermittelten Bildmerkmale IF zusammen mit einer Attestierung EEA an den Prozessor CPU. Die Attestierung EEA enthält neben einer Bestätigung der Identität und/oder der Eigenschaften des Hardware-Sicherheitsmoduls HSM einen Hash-Wert des analysierten Bildes sowie einen Hash-Wert der ermittelten Bildmerkmale IF, also jeweils einen Hash-Wert des Eingabewerts und des Ausgabewerts der Bildanalyse IA.

Der Prozessor CPU leitet die Bildmerkmale IF sowie die Attestierung EEA an den Client C weiter. Dieser prüft daraufhin die Attestierung EEA in einem dritten Schritt 3 und akzeptiert abhängig vom Ergebnis die ermittelten Bildmerkmale IF in einem vierten Schritt 4.

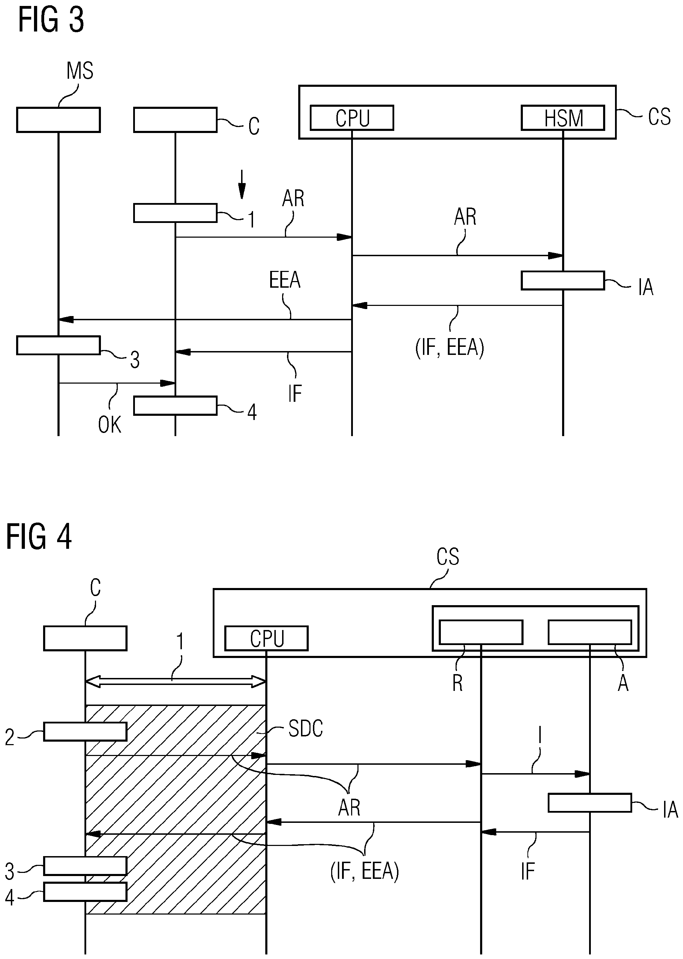

Figur 3 zeigt ein weiteres Ausführungsbeispiel, bei dem die Attestierung EEA einem separaten Überwachungssystem MS bereitgestellt wird. Dieses überprüft, ob die Berechnungen tatsächlich durch eine zulässige Ausführungsumgebung erfolgt sind. In einem ersten Schritt 1 wählt ein Client C wie im zuvor beschriebenen Ausführungsbeispiel ein Bild zur Analyse aus, welches er mit einer Analyseanfrage AR an einen Prozessor CPU eines Computersystems CS sendet. Dieser sendet die Analyseanfrage AR wie zuvor beschrieben an ein Hardware-Sicherheitsmodul HSM, welches die Bildanalyse IA durchführt und neben den ermittelten Bildmerkmalen IF auch eine Attestierung EEA an den Prozessor CPU zurückgibt.

Im vorliegenden Ausführungsbeispiel sendet der Prozessor CPU die Attestierung EEA an das Überwachungssystem MS, während die Bildmerkmale an den Client C übermittelt werden. In einem dritten Schritt überprüft das Überwachungssystem MS die Attestierung EEA. Bei erfolgreicher Prüfung sendet das Überwachungssystem MS eine Freigabe OK an den Client C, welcher daraufhin in einem vierten Schritt 4 die Bildmerkmale IF akzeptiert.

Figur 4 zeigt ein weiteres Ausführungsbeispiel, bei dem unterschiedliche Applikationen (Apps, beispielsweise als Docker Container implementiert) auf ein Hardware-Sicherheitsmodul HSM geladen werden können. Hierbei ist es möglich, dass eine Laufzeitumgebung R auf dem Hardware-Sicherheitsmodul HSM bestätigt, durch welche App auf dem Hardware-Sicherheitsmodul HSM eine Berechnung erfolgt ist.

In einem ersten Schritt 1 wird auch hier mit dem Verschlüsselungsprotokoll TLS ein sicherer Kommunikationskanal zwischen dem Client C und einem Prozessor CPU des Computersystems CS aufgebaut. Anschließend beginnt eine sichere Datenverbindung SDC zwischen dem Client C und dem Prozessor CPU. Daraufhin erfasst oder wählt der Client C in einem zweiten Schritt 2 ein Bild I, welches er mit einer Analyseanfrage AR an den Prozessor CPU sendet. Dieser leitet die Analyseanfrage AR mit dem Bild an die Laufzeitumgebung R im Hardware-Sicherheitsmodul HSM weiter. Die Laufzeitumgebung R übergibt das Bild I an eine Bildanalyse-App A, welche daraufhin die Bildanalyse IA durchführt, wobei das Bild I als Eingabewert dient und Bildmerkmale IF als Ausgabewert berechnet werden, welche an die Laufzeitumgebung R zurückgegeben werden.

Die Laufzeitumgebung R stellt nun eine Attestierung EEA aus, welche neben einer Bestätigung der Identität und/oder der Eigenschaften des Hardware-Sicherheitsmoduls HSM einen Hash-Wert des analysierten Bildes I sowie einen Hash-Wert der ermittelten Bildmerkmale IF, also jeweils einen Hash-Wert des Eingabewerts und des Ausgabewerts der Bildanalyse IA enthält. Zusätzlich enthält die Attestierung EEA einen Identifikator der Bildanalyse-App A. Der Identifikator spezifiziert die Bildanalyse-App A beispielsweise durch ihren Dateinamen, ihren App-Namen, ihre Versionsinformation oder einen Hash-Wert ihrer Datei.

Anschließend sendet die Laufzeitumgebung R die ermittelten Bildmerkmale IF zusammen mit der Attestierung EEA an den Prozessor CPU. Der Prozessor CPU leitet die Bildmerkmale IF sowie die Attestierung EEA an den Client C weiter. Dieser prüft daraufhin die Attestierung EEA in einem dritten Schritt 3 und akzeptiert abhängig vom Ergebnis die ermittelten Bildmerkmale IF in einem vierten Schritt 4.

Die in den Ausführungsbeispielen erläuterten Vorgehensweisen eignen sich beispielsweise im Kontext der Umfeldanalyse für autonomes Fahren oder autonome Roboter oder für eine Cloud-basierte sicherheitskritische Steuerung etwa von Energienetzen, Signalanlagen von Schienennetzen oder Flotten autonomer Fahrzeuge oder Roboter. Insbesondere kann überprüft werden, dass eine sicherheitskritische Berechnung tatsächlich in einer geschützten Ausführungsumgebung, insbesondere in einem Hardware Security Modul, erfolgt ist und somit vertrauenswürdig ermittelt wurde.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Verfahren zur sicheren Nutzung einer geschützten Ausführungsumgebung, bei dem
- eine geschützte Ausführungsumgebung (HSM) mindestens einen Eingabewert (I) erhält und mindestens einen Ausgabewert (IF) ermittelt,
- die geschützte Ausführungsumgebung (HSM) eine Identität und/oder Eigenschaften der geschützten Ausführungsumgebung (HSM) mittels einer kryptographisch geschützten Attestierung (EEA) bestätigt, und
- die geschützte Ausführungsumgebung (HSM) den Ausgabewert (IF) und die Attestierung (EEA) ausgibt.

2. Verfahren nach Anspruch 1,
- bei dem die Attestierung (EEA)
- den Eingabewert (I) und/oder Ausgabewert (IF) selbst,
- einen kryptographischen Hash-Wert des Eingabewerts (I) und/oder des Ausgabewerts (IF), oder
- eine Identifizierungsinformation des Eingabewerts (I) und/oder des Ausgabewerts (IF)
beinhaltet.

3. Verfahren nach Anspruch 1 oder 2,
bei dem die Attestierung (EEA)
- einen Typ der geschützten Ausführungsumgebung (HSM),
- eine verwendete Hardware-Recheneinheit der geschützten Ausführungsumgebung (HSM),
- eine Konfiguration der geschützten Ausführungsumgebung (HSM),
- eine Selbsttest-Information der geschützten Ausführungsumgebung (HSM),
- eine Diagnose-Information der geschützten Ausführungsumgebung (HSM),
- eine Angriffssicherheits-Zertifizierung der geschützten Ausführungsumgebung (HSM) betreffend Kriminalprävention,
- eine Betriebssicherheits-Zulassung der geschützten Ausführungsumgebung (HSM),
- Betriebssicherheits-Eigenschaften der geschützten Ausführungsumgebung (HSM), und/oder
- Schutzeigenschaften einer Umgebung der geschützten Ausführungsumgebung (HSM)
beinhaltet.

4. Verfahren nach einem der vorhergehenden Ansprüche,
- bei dem mindestens eine Umgebungsbedingung der geschützten Ausführungsumgebung (HSM) während der Ermittlung des Ausgabewerts (IF) mittels eines Sensors (TPS) erfasst wird, und
- bei dem die Attestierung (EEA) die Umgebungsbedingung beinhaltet.

5. Verfahren nach einem der vorhergehenden Ansprüche,
- bei dem die Attestierung (EEA) eine Zählerinformation und/oder einen Zeitstempel beinhaltet.

6. Verfahren nach einem der vorhergehenden Ansprüche,
- bei dem die geschützte Ausführungsumgebung (HSM) eine Laufzeitumgebung (R) und mindestens eine App (A) enthält,
- bei dem die Laufzeitumgebung (R) den Eingabewert (I) an die App (A) weiterleitet,
- bei dem die App (A) den Ausgabewert (IF) berechnet und an die Laufzeitumgebung (R) zurückgibt, und
- bei dem die Laufzeitumgebung (R) einen Identifikator der App (A) in die Attestierung (EEA) aufnimmt.

7. Verfahren nach einem der vorhergehenden Ansprüche,
- bei dem der Ausgabewert (IF) ein Steuersignal zur Ansteuerung einer Komponente in einer industriellen Anlage, insbesondere eines Industrieroboters in einer Fertigungsanlage, ist, und/oder
- bei dem die geschützte Ausführungsumgebung (HSM) in einer Cloud oder in einem Steuergerät angeordnet ist.

8. Verfahren nach einem der vorhergehenden Ansprüche,
- bei dem der Ausgabewert (IF) ein Messwert ist, welcher von einer Komponente in einer industriellen Anlage, insbesondere einem Industrieroboter in einer Fertigungsanlage, mit einem Sensor gemessen wurde, und/oder
- bei dem der Ausgabewert (IF) ein Betriebszustand einer Komponente in einer industriellen Anlage, insbesondere eines Industrieroboters in einer Fertigungsanlage, ist.

9. Verfahren nach einem der vorhergehenden Ansprüche,
- bei dem die geschützte Ausführungsumgebung (HSM) die Attestierung (EEA) und den Ausgabewert (IF) an eine weitere Komponente sendet,
- bei dem die weitere Komponente die Attestierung (EEA) prüft, und
- bei dem die weitere Komponente den Ausgabewert (IF) akzeptiert, falls die Prüfung erfolgreich ist.

10. Verfahren nach Anspruch 9,
- bei dem die weitere Komponente zuvor den Eingabewert (I) an die geschützte Ausführungsumgebung (HSM) sendet.

11. Verfahren nach einem der Ansprüche 1 bis 8,
- bei dem die geschützte Ausführungsumgebung (HSM) die Attestierung (EEA) an eine Überwachungseinheit (MS) und den Ausgabewert (IF) an eine weitere Komponente sendet,
- bei dem die Überwachungseinheit (MS) die Attestierung (EEA) überprüft und den Ausgabewert (IF) akzeptiert, falls die Prüfung erfolgreich ist.

12. Verfahren nach Anspruch 4,
- bei dem die geschützte Ausführungsumgebung (HSM) die Attestierung (EEA) an eine Überwachungseinheit (MS) sendet,
- bei dem die Überwachungseinheit (MS) überprüft, ob die mindestens eine Umgebungsbedingung ein vorgegebenes Kriterium erfüllt, und eine Alarm-Meldung generiert, falls das Kriterium nicht erfüllt ist.

13. Computersystem (CS),
- mit einem Prozessor (CPU), und
- mit einer geschützten Ausführungsumgebung (HSM), eingerichtet zur Durchführung des Verfahrens nach einem der Ansprüche 1 bis 8.

14. Steuergerät,
- mit einem Computersystem (CS) nach Anspruch 13.

15. Industrieroboter,
- mit einem Computersystem (CS) nach Anspruch 13.

16. Client (C) zur sicheren Nutzung einer geschützten Ausführungsumgebung,
- mit einer Kommunikationsschnittstelle, eingerichtet
- zur Versendung eines Eingabewerts (I) sowie
- zum Empfang eines Ausgabewerts (IF) und einer kryptographisch geschützten Attestierung (EEA), und
- mit einem Prozessor, programmiert
- zur Prüfung der Attestierung (EEA) dahingehend, ob diese eine zulässige Identität und/oder zulässige Eigenschaften einer geschützten Ausführungsumgebung (HSM) bestätigt, in der der Ausgabewert (IF) anhand des Eingabewerts (I) ermittelt wurde, und
- zur Akzeptanz des Ausgabewerts (IF), falls das Ergebnis der Prüfung mindestens ein vorgegebenes Kriterium erfüllt.

17. Steuergerät,
- mit einem Client (C) nach Anspruch 16.

18. Industrieroboter,
- mit einem Client (C) nach Anspruch 16.

19. Überwachungseinheit (MS) zur sicheren Nutzung einer geschützten Ausführungsumgebung,
- mit einer Kommunikationsschnittstelle, eingerichtet
- zum Empfang einer kryptographisch geschützten Attestierung (EEA), und
- mit einem Prozessor, programmiert
- zur Prüfung der Attestierung (EEA) dahingehend, ob diese eine zulässige Identität und/oder zulässige Eigenschaften einer geschützten Ausführungsumgebung (HSM) bestätigt, und
- zur Sendung einer Freigabe mittels der Kommunikationsschnittstelle an eine weitere Komponente (C), falls die Prüfung erfolgreich war.

20. Alarmierungseinheit zur sicheren Nutzung einer geschützten Ausführungsumgebung,
- mit einer Kommunikationsschnittstelle, eingerichtet
- zum Empfang einer kryptographisch geschützten Attestierung (EEA), welche mindestens eine Umgebungsbedingung einer geschützten Ausführungsumgebung bestätigt, und
- mit einem Prozessor, programmiert
- zur Prüfung, ob die Umgebungsbedingungen ein vorgegebenes Kriterium erfüllt, und
- zur Generierung einer Alarm-Meldung, wenn das Kriterium nicht erfüllt ist.

21. Automatisierungsnetzwerk,
- mit einem Computersystem (CS) nach Anspruch 13, einem Steuergerät nach Anspruch 14, und/oder einem Industrieroboter nach Anspruch 15, und/oder
- mit einem Client (C) nach einem der Ansprüche 16 bis 18, und/oder
- mit einer Überwachungseinheit (MS) nach Anspruch 19, und/oder
- mit einer Alarmierungseinheit nach Anspruch 20.
